# EUROPEAN PATENT APPLICATION

(11) **EP 4 667 766 A1**
(43) Date of publication of application: **24.12.2025**
(21) Application number: 24756859.5
(22) Date of filing: 13.02.2024
(51) Int. Cl.: F16C 33/38, F16C 19/04, F16C 33/32

(54) **ROLLING BEARING**

(30) Priority: 17.02.2023 JP 2023023370
(71) Applicant: NTN Corporation, Osaka-shi Osaka 530-0005 (JP)
(72) Inventor: ITO, Takeru, Kuwana-shi, Mie 511-8678 (JP); ISHIDA, Hikaru, Kuwana-shi, Mie 511-8678 (JP)
(74) Representative: Grünecker Patent- und Rechtsanwälte PartG mbB
(86) International application number: PCT/JP2024/004770
(87) International publication number: WO 2024/172014

(57) **Abstract**

A rolling bearing is provided which includes a cage (3) including two annular members (11) each including (i) pocket walls (9) each having a recess, and (ii) connection plates (10) circumferentially alternating with the pocket walls (9), and each coupling together corresponding ones of the pocket walls (9), the two annular members (11) being axially opposed to each other such that pockets (2) are circumferentially defined by the recesses of the pocket walls (9) of the two annular members (11); an inner ring (5) having an inner ring raceway surface (4) on an outer peripheral surface of the inner ring (5); an outer ring (7) disposed on an outer peripheral side of the inner ring (5), the outer ring (7) having an outer ring raceway surface (6) on an inner peripheral surface of the outer ring (7); and balls (8) interposed between the inner ring (5) and the outer ring (7), the balls (8) being retained in the respective pockets (2), which are defined in the cage (3), wherein spherical portions (17) are formed on the respective pocket walls (9) of the two annular members (11), the spherical portions (17) being out of contact with the balls (8) in a state where the balls (8) are in abutment with circumferential ends of the pockets (2).

## Description

### TECHNICAL FIELD

The present invention relates to a rolling bearing in which a cage is used which comprises two annular members axially opposed to each other.

### BACKGROUND ART

In a rolling bearing lubricated with grease, it is known that grease adhering to the surfaces of rolling balls is interposed between the surfaces of the balls and the inner surfaces of pockets of a cage and between the surfaces of the balls and raceway surfaces of outer and inner rings, thereby affecting various parameters such as temperature rise vibration and noise values of a bearing, and the flow of the grease in the interior of the bearing significantly affects the performance of the bearing.

For example, in the below-identified Patent Document 1, arc-shaped cutout portions are formed on the radially inner side or the radially outer side of pockets of a cage, thereby improving the scraping performance of grease adhering to the surfaces of balls so as to reduce a break-in time. In addition, a portion of the grease remaining in a stationary space is scraped by the cutout portions and base oil is supplied between the balls and the pockets so as to reduce heat generation. Formation of the cutout portion improves the scraping performance of the grease, but action of a centrifugal force on the cage rotating at high speed deforms the pockets so as to narrow axial gaps between the balls and the pockets, and thus the balls and the pockets interfere with each other, so that bearing parameters such as oil staining, abnormal wear and heat generation could deteriorate.

For example, in the below-identified Patent Document 2, pockets of a cage have a cylindrical shape on the radially inner side of a pitch circle of balls so as to provide interference avoidance, so that even if the pockets of the cage are axially deformed by a centrifugal force, the balls and the pockets do not interfere with each other.

### PRIOR ART DOCUMENT(S)

### PATENT DOCUMENT(S)

Patent Document 1: Japanese Unexamined Patent Application Publication No. 2020-159548
Patent Document 2: Japanese Examined Patent Publication No. 5876237

### SUMMARY OF THE INVENTION

### PROBLEMS TO BE SOLVED BY THE INVENTION

As disclosed in Patent Document 2, since the pockets have a cylindrical shape on the radially inner side, it is possible to prevent the interference between the balls and the pockets on the radially inner side, but gaps between the balls and the pockets are increased. This increases the amount of the grease entering the pockets at the start of operation, and space volumes of the interiors of the pockets are increased. Therefore, the amount of the grease remaining is increased. Consequently, the following problem occurs: a break-in time is increased and the amount of heat generation is increased due to shear between the grease and the balls in the interiors of the pockets. Further, since the pockets have a cylindrical shape on the radially inner side, rigidity is reduced due to a reduction in wall thicknesses of the pockets on the radially inner side, and the amount of deformation due to a centrifugal force is increased, and therefore the pockets having a cylindrical shape on the radially inner side may be inapplicable to high-speed rotation applications.

In view of the above, it is an object of the present invention to provide a rolling bearing in which the balls and the cage do not interfere with each other, and which is thus excellent in high-speed rotation performance.

### MEANS FOR SOLVING THE PROBLEMS

In order to achieve the above object, the present invention provides a rolling bearing including:
a cage comprising two annular members each including a plurality of pocket walls each having a recess, and connection plates circumferentially alternating with the pocket walls, and each coupling together corresponding ones of the pocket walls, the two annular members being axially opposed to each other such that a plurality of pockets are circumferentially defined by the recesses of the pocket walls of the two annular members;
an inner ring having an inner ring raceway surface on an outer peripheral surface of the inner ring;
an outer ring disposed on an outer peripheral side of the inner ring, the outer ring having an outer ring raceway surface on an inner peripheral surface of the outer ring;
a plurality of balls interposed between the inner ring and the outer ring, the plurality of balls being retained in the respective pockets, which are defined in the cage; and
wherein spherical portions are formed on the respective pocket walls of the two annular members, the spherical portions being out of contact with the plurality of balls in a state where the balls are in abutment with circumferential ends of the pockets.

With this arrangement, since the contact between the balls and the spherical portions on the pocket walls is prevented, it is possible to prevent bearing parameters such as oil staining, abnormal wear, and heat generation from deteriorating. In addition, since a relief shape is spherical, the size of the gap between each ball and the corresponding pocket is not excessive, and it is possible to prevent the amount of the grease entering the pockets from being excessive at the start of operation, and therefore it is possible to reduce the break-in time. Further, since the wall thicknesses of axial ends of the pockets are not reduced, rigidity is ensured and it is possible to reduce deformation of the cage when a centrifugal force acts thereon.

In the above arrangement, cutout portions may be formed on at least one of a radially inner side or a radially outer side of the pockets such that radial widths of the pocket walls of the two annular members are smaller than radial widths of the connection plates of the two annular members. With this arrangement, the amount of grease is reduced by a reduction in grease-holding areas between the balls and the cage, and it is possible to reduce heat generation due to shear between the grease and the balls in the interiors of the pockets, and reduce imbalance due to uneven distribution of the grease. In addition, since the effect of scraping the grease adhering to the balls is exerted by the cutout portions, it is possible to further reduce the break-in time for operation.

In all of the above arrangements, the spherical portions may be formed on a radially inner side of the pockets of the two annular members, and cylindrical portions may be formed on a radially outer side of the pocket walls of the two annular members. With this arrangement, it is possible to prevent excessive entry of the grease in between the balls and the pockets from the radially inner side, and smoothly release the grease in the pockets from the cylindrical portions toward the radially outer side by the centrifugal force acting on the grease, and it is possible to further reduce heat generation due to shear between the grease and the balls in the interiors of the pockets and the imbalance. That is, the cylindrical portions serve as relief portions.

In all of the above arrangements, circumferential wall surfaces of the spherical portions may be inclined along a radial direction of a pitch circle of the balls. With this arrangement, since the circumferential wall surfaces of the spherical portions do not provide resistance to grease release, it is possible to reduce the amount of the grease remaining in the pockets, and further increase releasability of the grease.

In all of the above arrangements, the plurality of balls may be made of a ceramic material. With this arrangement, since the balls are reduced in weight, it is possible to reduce the impact when the balls and the cage collide against each other, and thus increase quietness during high-speed rotation.

### EFFECTS OF THE INVENTION

According to the present invention, in a rolling bearing including a cage in which the plurality of pockets are circumferentially formed by axially opposing the two annular members to each other, since the pocket walls are provided with the spherical portions which are out of contact with the balls in a state where the balls are in abutment with the circumferential ends of the pockets, it is possible to provide a rolling bearing with excellent high-speed rotation performance.

### BRIEF DESCRIPTION OF THE DRAWINGS

Fig. 1 is a sectional view of a rolling bearing according to an embodiment of the present invention.
Fig. 2 is a sectional view of a portion of the rolling bearing shown in Fig. 1.
Fig. 3 is a sectional view taken along the line III-III in Fig. 1.
Fig. 4 is a sectional view taken along the line IV-IV in Fig. 3.
Fig. 5 is a sectional view of a portion of a first variation of the rolling bearing shown in Fig. 1.
Fig. 6 is a sectional view taken along the line VI-VI in Fig. 5.
Fig. 7 is an axial sectional view of a portion of the rolling bearing shown in Fig. 5.
Fig. 8A is a sectional view of a portion of the rolling bearing shown in Fig. 5 before deformation of the cage.
Fig. 8B is a sectional view of a portion of the rolling bearing shown in Fig. 5 after deformation due to a centrifugal force.
Fig. 9 is a sectional view of a portion of a second variation of the rolling bearing shown in Fig. 1.
Fig. 10A is a circumferential sectional view of a portion of a third variation of the rolling bearing shown in Fig. 1.
Fig. 10B is an axial sectional view of a portion of the third variation of the rolling bearing shown in Fig. 1.
Fig. 11 is a view showing an example of performance evaluation.

### BEST MODE FOR CARRYING OUT THE INVENTION

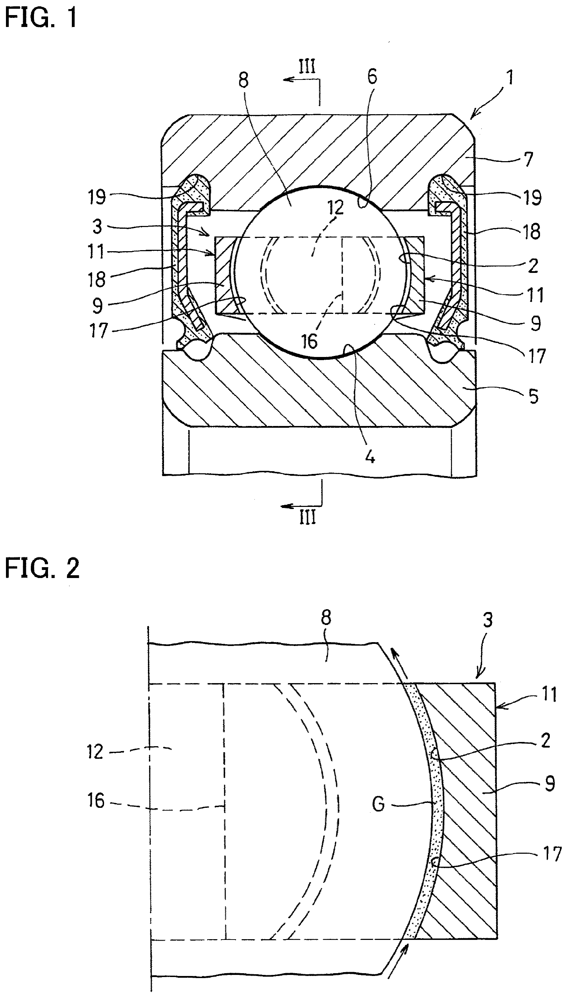

An embodiment of a rolling bearing 1 according to the present invention will be described with reference to the accompanying drawings. In the following description the terms "axial" and "axially" refer to the direction along the rotation center axis of the rolling bearing 1; the terms "radial" and "radially" refer to a direction orthogonal to the rotation center axis; and the terms "circumferential" and "circumferentially" refer to the direction around the rotation center axis. As shown in Figs. 1 to 4, the rolling bearing 1 is a ball bearing including a cage 3 having a plurality of pockets 2 circumferentially at predetermined intervals, an inner ring 5 having an inner ring raceway surface 4 on its outer peripheral surface, an outer ring 7 located on the outer peripheral side of the inner ring 5, and having an outer ring raceway surface 6 on its inner peripheral surface, and a plurality of balls 8 interposed between the inner ring 5 and the outer ring 7, the balls 8 being retained in the respective pockets 2, which are formed in the cage 3.

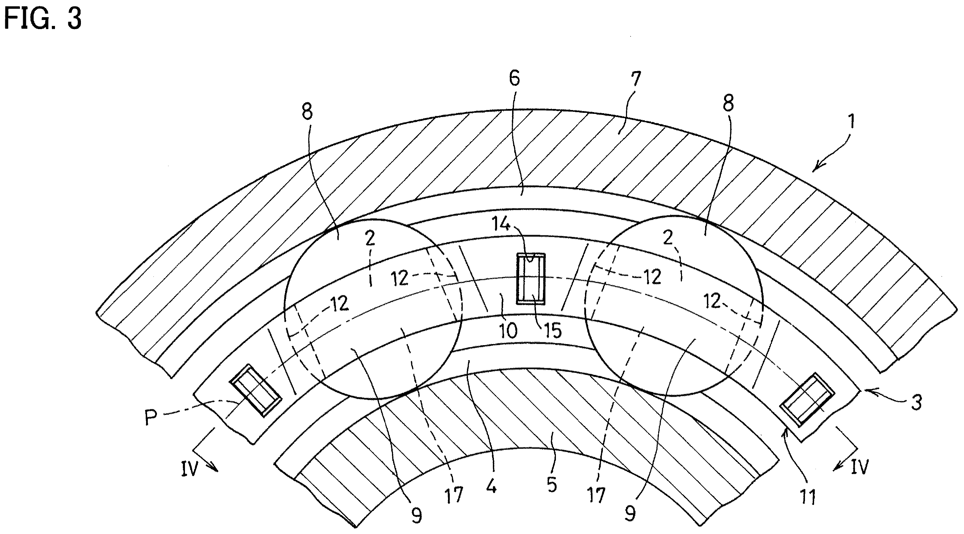

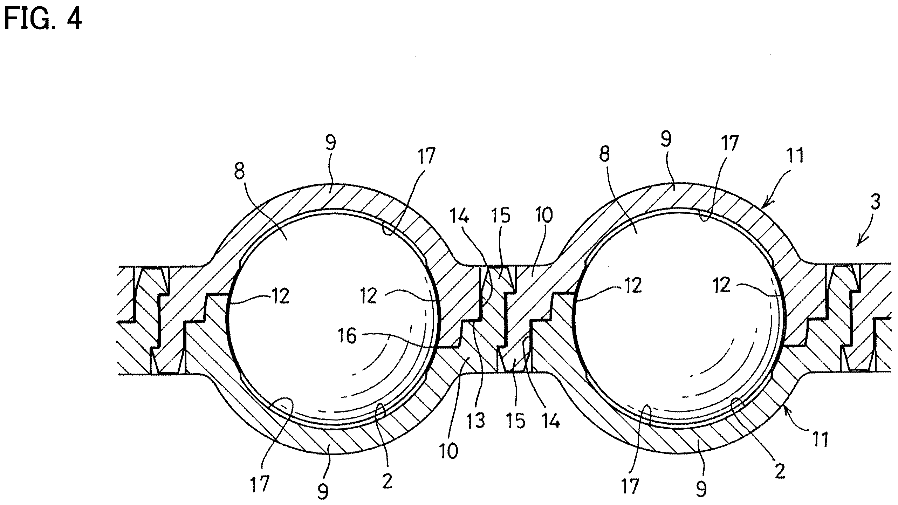

As shown in Figs. 3 and 4, the cage 3 comprises two annular members 11 each including a plurality of pocket walls 9 each having a recess, and connection plates 10 circumferentially alternating with the pocket walls 9, and each coupling together corresponding ones of the pocket walls 9, the annular members 11 being axially opposed to each other such that the pockets 2 are circumferentially defined by the recesses of the pocket walls 9 of the two annular members 11. With the two annular members 11 combined together, the pocket walls 9 restrict axial movement of the balls 8, and the connection plates 10 restrict circumferential movement of the balls 8. On the sides of the connection plates 10 in the respective pockets 2, spherical recesses 12 are disposed so as to circumferentially oppose the balls 8 to the respective spherical recesses 12, and the balls 8 rotate while being guided in the respective spherical recesses 12.

The cage 3 is of a ball-guided type in which the cage 3 is radially positioned by contact with the inner surfaces of the pockets and the balls 8. Thus, the inner periphery of the cage 3 is out of contact with the inner ring 5, and the outer periphery of the cage 3 is out of contact with the outer ring 7.

Each of the annular members 11, which constitute the cage 3, is formed by injection molding of synthetic resin. The two annular members 11 have the same shape, and can be molded by the same mold. Examples of the synthetic resin constituting the annular members 11 include thermoplastic resin such as polyamide (PA), polyphenyl sulfide (PPS) and polyetheretherketone (PEEK). In the synthetic resin constituting the respective annular members 11, for example, in order to increase its strength, fibers such as glass fibers, carbon fibers and aramid fibers are mixed.

As shown in Fig. 4, the connection plates 10 include abutment surfaces 13 in which the annular members 11 are in surface contact with each other when the two annular members 11 are combined. A connection hole 14 is disposed on one of the abutment surfaces 13, and a connection claw 15 is disposed on the other of the abutment surfaces 13. By fitting the connection claw 15 into the connection hole 14, the two annular members 11 are connected. Abutment lines 16 of the two annular members 11 are located so as to avoid the centers of the spherical recesses 12.

As shown in Figs. 1 to 4, each of the pocket walls 9 is provided with a spherical portion 17 having a spherical surface extending along the corresponding ball 8. A grease G entering gaps between the balls 8 and the pockets 2 from the radially inner side of the rolling bearing 1 moves toward the radially outer side of the rolling bearing 1 by a centrifugal force as indicated by the arrow in Fig. 2, and is then released from the pockets 2.

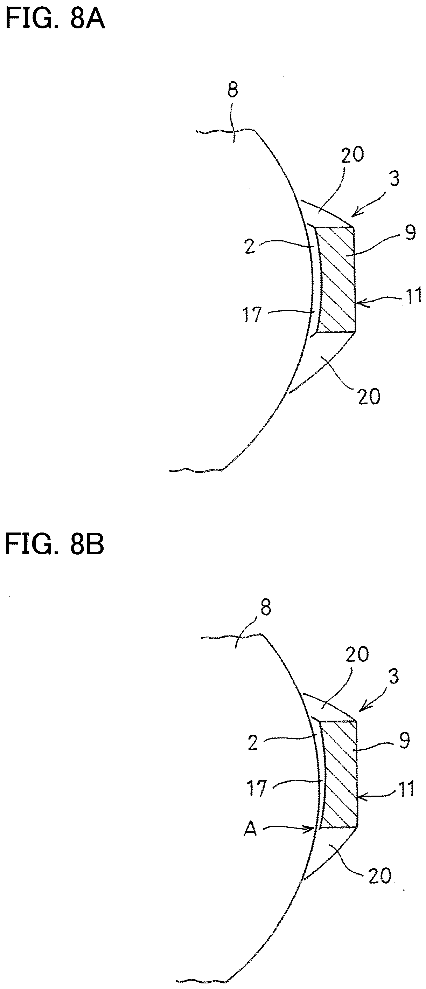

When the cage 3 is deformed by the centrifugal force, the balls 8 come into contact with the respective spherical recesses 12 along both sides of the respective spherical recesses 12 at the beginning of deformation of the cage 3. Each of the spherical portions 17, which are formed in the inner surfaces of the pockets 2, is designed as an interference avoidance portion so as to provide a slight gap between each ball 8 and an axial end of the corresponding pocket 2 when the cage 3 is deformed by the centrifugal force in a state where the balls 8 are in abutment with the circumferential ends (on the connection plate 10 side) of the respective pockets 2 (see portion A of Fig. 8B), thereby preventing each ball 8 and the axial end of the corresponding pocket 2 from interfering with each other. In this embodiment, each of the spherical portions 17 is formed by increasing a radius of curvature of the inner surface of each pocket 2 so that a gap is ensured between each ball 8 and the corresponding pocket 2 when the assumed maximum centrifugal force acts on the cage 3.

As shown in Fig. 1, a pair of seal members 18 are located between the inner ring 5 and the outer ring 7 so that the pair of seal members 18 are axially opposed to each other with the balls 8 and the cage 3 interposed therebetween. The outer peripheries of the seal members 18 are fixed to seal grooves 19 formed on both axial sides of the outer raceway surface 6 of the outer ring 7, and the inner peripheries of the seal members 18 slidably make contact with the outer periphery of the inner ring 5. The seal members 18 prevent the grease G sealed in an annular space between the inner ring 5 and the outer ring 7 from leaking outside the rolling bearing 1.

The balls 8 are made of a ceramic material having a smaller specific gravity than those of commonly used steels. As the ceramic material, for example, it is possible to use silicon nitride (Si₃N₄) having a specific gravity not greater than half of those of the steels.

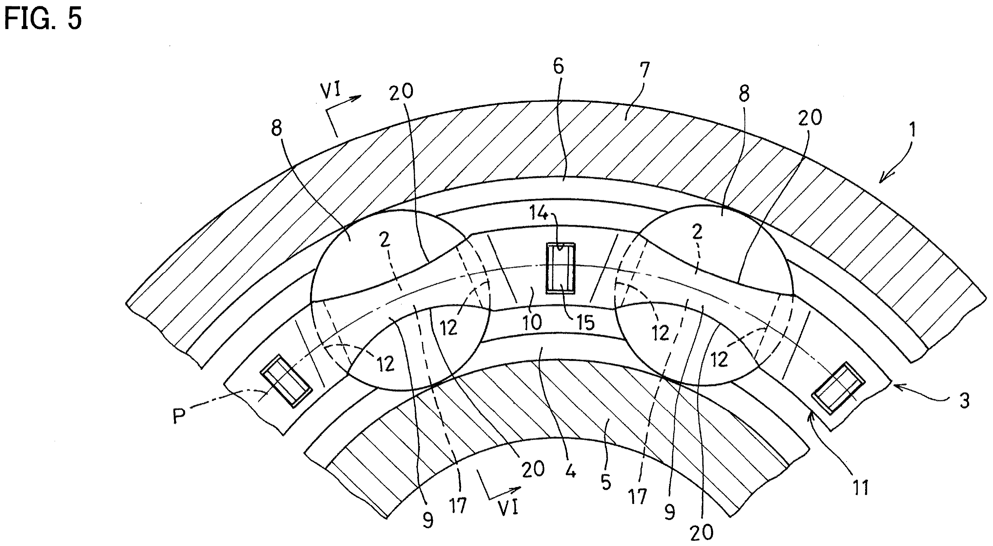

Figs. 5 to 8A and 8B show a first variation of the above embodiment. A rolling bearing 1 according to the first variation includes cutout portions 20 formed on the radially inner side and the radially outer side of the pockets 2 such that radial widths of the pocket walls 9 are smaller than radial widths of the connection plates 10. Although the cutout portions 20 are formed, for example, at the time of injection molding of the annular members 11, the cutout portions 20 can be formed by additional processing after the injection molding. the cutout portions 20 have an arc shape, a radial width in the circumferential middle section of each pocket wall 9 is the smallest, and the radial width gradually increases from the circumferential middle section toward both circumferential sides of each pocket wall 9. A pitch circle of the balls 8 is located in the substantial center of the radial width in the circumferential middle section of each pocket wall 9.

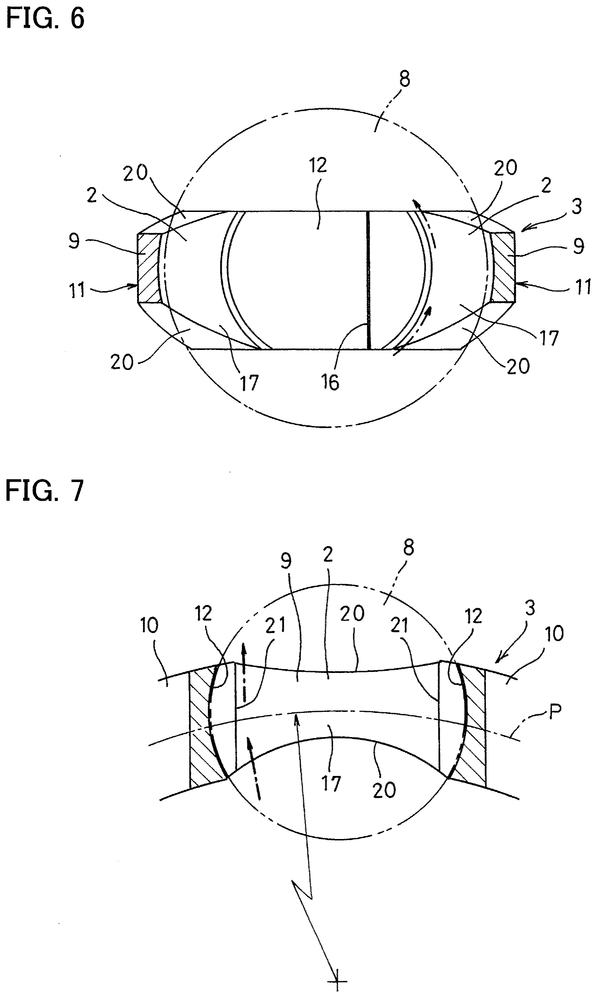

A grease G entering gaps between the balls 8 and the pockets 2 from the radially inner side of the rolling bearing 1 moves toward the radially outer side of the rolling bearing 1 along the inner surface of each pocket 2 and a circumferential wall surface 21 of each spherical portion 17 by the centrifugal force as indicated by the dash-dotted arrows in Figs. 6 and 7, and is then released from each pocket 2. As described above, since each of the spherical portions 17 is formed in the inner surface of the corresponding pocket 2, when the cage 3 is deformed by the centrifugal force, as shown in Fig. 8B, a slight gap is generated between each ball 8 and the axial end of the corresponding pocket 2, and it is possible to prevent each ball 8 and the axial end of the corresponding pocket 2 from interfering with each other. That is, the spherical portions 17 serve as interference avoidance portions.

In the embodiment, although the cutout portions 20 are formed on the radially inner side and the radially outer side of the pockets 2, it is possible to form the cutout portions 20 on only one of the radially inner side and the radially outer side of the pockets 2. In addition, instead of the cutout portions 20 having an arc shape, the cutout portions 20 may have a stepped shape.

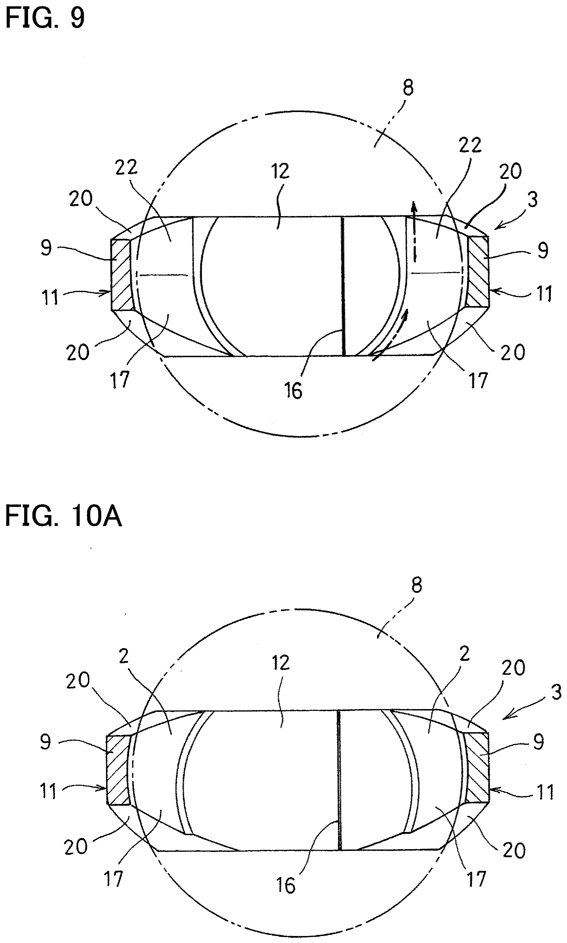

Fig. 9 shows a second variation of the above embodiment. A rolling bearing 1 according to the second variation is common to the rolling bearing 1 according to the first variation in that each of the spherical portions 17 is formed on the radially inner side of the corresponding pocket 2, and the rolling bearing 1 according to the second variation is different from the rolling bearing 1 according to the first variation in that cylindrical portions 22 having a cylindrical shape extending radially are formed on the radially outer side of the pockets 2. Each spherical portion 17 and the corresponding cylindrical portion 22 are continuous near the pitch circle P of the balls 8, and an internal diameter of each cylindrical portion 22 is the same as an internal diameter of each spherical portion 17 (an interference avoidance portion) in the boundary of each spherical portion 17 and the corresponding cylindrical portion 22. Although it is preferable that the boundary of each spherical portion 17 and the corresponding cylindrical portion 22 is identical with the pitch circle P, the boundary is not necessarily identical with the pitch circle P, and, for example, there is also allowed a case where the boundary deviates from the pitch circle P on the radially inner side or the radially outer side thereof by at most about 1/4 of the diameter of each ball 8.

According to the above arrangement, since the cylindrical portions 22 are formed on the radially outer side of the pockets 2, the gap between each ball 8 and the corresponding pocket 2 is increased on the radially outer side of each pocket 2, and a sufficiently wide release channel for the grease G is ensured. Thus, as in the rolling bearings 1 according to the above embodiment and the first variation, it is possible to prevent axial interference between the balls 8 and the pockets 2 and excess entry of the grease G into the interiors of the pockets 2, to smoothly release the grease G in the pockets 2 from the cylindrical portions 22 toward the radially outer side by the centrifugal force, and to further reduce heat generation due to shear between the grease G and the balls 8 in the interiors of the pockets 2 and imbalance due to uneven distribution of the grease G.

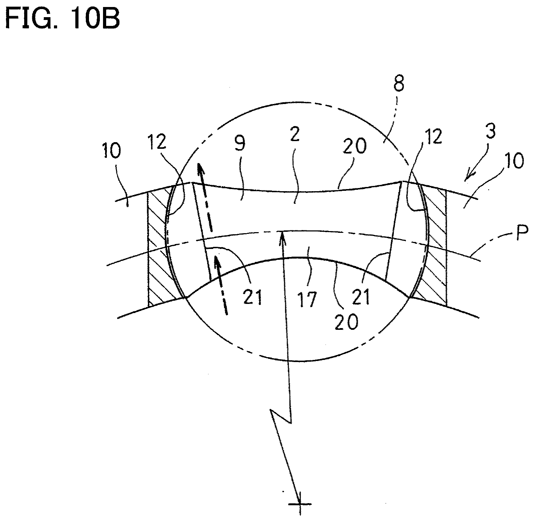

Figs. 10A and 10B show a third variation of the above embodiment. A rolling bearing 1 according to the third variation is directed to increase of the releasability of the grease G as in the second variation, and the circumferential wall surfaces 21 of the spherical portions 17 are inclined along a radial direction of the pitch circle P of the balls 8.

According to the above arrangement, since the circumferential wall surfaces 21 are inclined along the radial direction of the pitch circle P, the circumferential wall surfaces 21 of the spherical portions 17 do not provide resistance at the time of releasing the grease G. Thus, it is possible to reduce the amount of the grease G remaining in the pockets 2 (in particular, on the radially outer side of the circumferential ends of the pockets 2) and to even smoothly release the grease G toward the radially outer side by the centrifugal force (see the dash-dotted arrows in Fig. 10B).

### <Performance evaluation>

With respect to an arrangement exemplified as Patent Document 1 (Comparative example 1) and an arrangement exemplified as Patent Document 2 (Comparative example 2) as well as an arrangement according to the above embodiment of the present application (Example), a performance evaluation for oil staining (condition of deteriorated oil fixedly adhering to raceway surface), temperature rise characteristics (condition of temperature spike occurrence), vibration characteristics (condition of vibration occurrence), acoustic characteristics (condition of abnormal noise occurrence) was performed. The results are shown in Table 1. In Table 1,the symbol "A" refers to "good", the symbol "B" refers to "within an allowable range", and the symbol "C" refers to "bad".

As to Comparative example 1 (an arrangement in which cutout portions are simply formed in the pockets), the temperature rise characteristics, the vibration characteristics, and the acoustic characteristics were relatively good, but change in color due to oil staining was observed, and it was found that there was a problem in the product. In addition, as to Comparative example 2 (an arrangement in which the internal diameter side of the pockets have a cylindrical shape), there was no problem for oil staining, but it was found that there was a problem in the product for the temperature rise characteristics, the vibration characteristics and the acoustic characteristics. On the other hand, as to the arrangement according to the above embodiment of the present application, the oil staining, the vibration characteristics, and the acoustic characteristics were good, the temperature rise characteristics was within an allowable range and there were no particular problems in the product, and the balance of performance was excellent in comparison with the arrangements according to Comparative examples 1 and 2.

**[Table 1]**

| | Oil staining | Temperature rise characteristics | Vibration characteristics | Acoustic characteristics |
|---|---|---|---|---|
| Comparative example 1 | C | A | A | A |
| Comparative example 2 | A | C | C | C |
| Example | A | B | A | A |

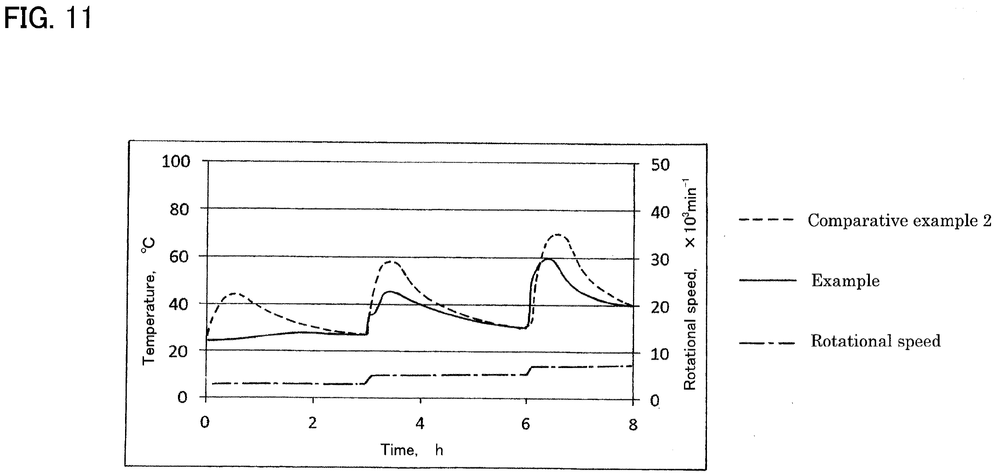

The measurement result of the temperature rise characteristic, which is one of items of the performance evaluation, is exemplified in Fig. 11. In Comparative example 2, significant temperature spikes (30 to 40°C) occurred when a bearing rotational speed changes (at the timings of three hours and six hours), whereas in Example, it was possible to significantly reduce the temperature spikes (20 to 30°C).

According to the rolling bearings 1 according to the above embodiment and the respective variations, since each of the spherical portions 17 are formed in the inner surface of the corresponding pocket 2, there can be provided the rolling bearing 1 which prevents the balls 8 and the pockets 2 from interfering with each other axially and has an excellent high-speed rotation performance such as the oil staining, the temperature rise characteristic, the vibration characteristic and the acoustic characteristic. In addition, since a relief shape is spherical, the size of the gap between each ball 8 and the corresponding pocket 2 is not excessive in comparison with the case of a cylindrical relief shape. Thus, it is possible to prevent the amount of the grease G entering the pockets 2 from being excessive at the start of operation, and to reduce the break-in time.

In addition, according to the rolling bearings 1 according to the respective variations, since the cutout portions 20 are formed on the radially inner side and the radially outer side of the pockets 2, grease-holding areas between the balls 8 and the cage 3 are reduced and the amount of grease is reduced. Therefore, it is possible to reduce heat generation due to shear between the grease G and the balls 8 in the interiors of the pockets 2. Further, since an effect of scraping the grease G adhering to the balls 8 is exerted by the cutout portions 20, it is possible to further reduce the break-in time for operation.

Further, according to the rolling bearings 1 according to the above embodiment and the respective variations, since the abutment lines 16 of the two annular members 11 are located so as to avoid the centers of the spherical recesses 12, the abutment lines 16 do not exist in the areas where the balls 8 and the cage 3 are most strongly contact with each other (the centers of the spherical recesses 12). Therefore, even if the cage 3 is deformed by the centrifugal force and any steps are generated in the abutment lines 16, it is possible to reduce adverse influence due to the steps and stabilize the movement of the cage 3 during high-speed rotation.

Furthermore, according to the rolling bearings 1 according to the above embodiment and the respective variations, since the balls 8 made of a ceramic material are used, the balls 8 are reduced in weight in comparison with steel balls, it is possible to reduce the impact when the balls 8 and the cage 3 collide against each other and thus increase quietness during high-speed rotation.

The above-described embodiments are mere examples in every respect, and the present invention is not limited thereto. The scope of the present invention is indicated by not the above description but the claims, and should be understood to include all modifications within the meaning and scope equivalent to the scope of the claims.

### DESCRIPTION OF REFERENCE NUMERALS

2: Pocket
3: Cage
4: Inner raceway surface
5: Inner ring
6: Outer raceway surface
7: Outer ring
8: Ball
9: Pocket wall
10: Connection plate
11: Annular member
17: Spherical portion
20: Cutout portion
21: Circumferential wall surface
22: Cylindrical portion
P: Pitch circle

## Claims

1. A rolling bearing comprising:
a cage (3) comprising two annular members (11) each including (i) a plurality of pocket walls (9) each having a recess, and (ii) connection plates (10) circumferentially alternating with the pocket walls (9), and each coupling together corresponding ones of the pocket walls (9), the two annular members (11) being axially opposed to each other such that a plurality of pockets (2) are circumferentially defined by the recesses of the pocket walls (9) of the two annular members (11);
an inner ring (5) having an inner ring raceway surface (4) on an outer peripheral surface of the inner ring (5);
an outer ring (7) disposed on an outer peripheral side of the inner ring (5), the outer ring (7) having an outer ring raceway surface (6) on an inner peripheral surface of the outer ring (7); and
a plurality of balls (8) interposed between the inner ring (5) and the outer ring (7), the plurality of balls (8) being retained in the respective pockets (2), which are defined in the cage (3),
wherein spherical portions (17) are formed on the respective pocket walls (9) of the two annular members (11), the spherical portions (17) being out of contact with the balls (8) in a state where the balls (8) are in abutment with circumferential ends of the pockets (2).

2. The rolling bearing according to claim 1, wherein cutout portions (20) are formed on at least one of a radially inner side and a radially outer side of the pockets (2) such that radial widths of the pocket walls (9) of the two annular members (11) are smaller than radial widths of the connection plates (10) of the two annular members (11).

3. The rolling bearing according to claim 1 or 2, wherein the spherical portions (17) are formed on the radially inner side of the pockets (2) of the two annular members (11), and cylindrical portions (22) are formed on the radially outer side of the pocket walls (9) of the two annular members (11).

4. The rolling bearing according to any one of claims 1 to 3, wherein circumferential wall surfaces (21) of the spherical portions (17) are inclined along a radial direction of a pitch circle (P) of the balls (8).

5. The rolling bearing according to any one of claims 1 to 4, wherein the balls (8) are made of a ceramic material.
